# EUROPÄISCHE PATENTSCHRIFT

(11) **EP 1 906 478 B1**
(45) Veröffentlichungstag und Bekanntmachung des Hinweises auf die Patenterteilung: **20.01.2010**
(21) Anmeldenummer: 07113902.6
(22) Anmeldetag: 07.08.2007
(51) Int. Cl.: H01M 8/02, H01M 8/04, H01M 8/06

(54) **Brennstoffzellensystem**
Fuel cell system
System de pile à combustible

(30) Priorität: 28.09.2006 DE 102006046258
(43) Veröffentlichungstag der Anmeldung: 02.04.2008
(73) Patentinhaber: J. Eberspächer GmbH & Co. KG, 73730 Esslingen (DE)
(72) Erfinder: Kaupert, Andreas, 73730 Esslingen (DE)
(74) Vertreter: Bongen, Renaud & Partner

(56) Entgegenhaltungen:
- DE-A1- 10 065 458
- DE-A1- 10 203 028
- US-A1- 2002 081 470
- US-A1- 2004 048 120
- US-B1- 6 608 463

## Beschreibung

Die vorliegende Erfindung betrifft ein Brennstoffzellensystem, insbesondere in einem Kraftfahrzeug, mit den Merkmalen des Oberbegriffs des Anspruchs 1.

Aus der DE 10 2004 033 545 A1 ist ein Brennstoffzellensystem bekannt, das eine Brennstoffzelle zum Generieren von elektrischem Strom aus einem wasserstoffhaltigen Anodengas und einem sauerstoffhaltigen Kathodengas aufweist. Das bekannte Brennstoffzellensystem weist ferner einen Restgasbrenner mit einem Brennraum zum Verbrennen von wasserstoffhaltigem Anodenabgas der Brennstoffzelle mit sauerstoffhaltigem Kathodenabgas der Brennstoffzelle auf. Im Betrieb erzeugt die Brennstoffzelle neben elektrischem Strom auch Wärme, die bei der Umsetzung oder "Verstromung" des Anodengases mit dem Kathodengas entsteht. Die an der Brennstoffzelle abgreifbare elektrische Leistung wird im wesentlichen durch die Menge des zugeführten Anodengases gesteuert. Um einen effizienten Betrieb der Brennstoffzelle zu erzielen und um eine Zerstörung der Brennstoffzelle zu vermeiden, muss die Brennstoffzelle in einem vorbestimmten Temperaturbereich betrieben werden. Die Brennstoffzellentemperatur kann beispielsweise durch die Menge des zugeführten Kathodengases gesteuert werden.

Um Schadstoffemissionen der Brennstoffzelle zu reduzieren und um die im Anodengas chemisch gebundene Energie effizient ausnutzen zu können, erfolgt im Restgasbrenner eine möglichst weitgehende Umsetzung des im Anodenabgas der Brennstoffzelle noch vorhandenen Wasserstoffs und Kohlenmonoxids durch Verbrennung. Bei bestimmten Betriebszuständen der Brennstoffzelle besteht das Problem, das der Restgasbrenner bei einer starken Kühlung der Brennstoffzelle, also bei einem erhöhten Kathodengasstrom und dementsprechend bei einem erhöhten Abgasstrom nicht ordnungsgemäß arbeitet.

Aus der US 2002/081470 A1 ist es für ein derartiges Brennstoffzellensystem bekannt, einen Bypass vorzusehen, mit dessen Hilfe Kathodenabgas stromauf des Brennraums entnommen werden kann und stromab des Restgasbrenners in Brennerabgas des Restgasbrenners eingespeist werden kann. Diese Bauweise beruht auf dem allgemeinen Gedanken, überschüssiges Kathodenabgas unter Umgehung des Restgasbrenners bzw. unter Umgehung dessen Brennraums abzuführen. Hierzu schlägt die Erfindung einen Bypass vor, der so angeordnet ist, dass er den überschüssigen Teil des Kathodenabgases stromauf des Brennraums entnimmt und stromab des Restgasbrenners in das Brennerabgas einspeist. Durch eine entsprechende Steuerung des über den Bypass den Brennraum umgehenden Kathodenabgasstroms kann die Menge des dem Brennraum zugeführten Kathodenabgasstroms eingestellt werden. Insbesondere kann somit für den Brennraum stets ein optimales Verhältnis von Kathodenabgas zu Anodenabgas eingestellt werden. Der Restgasbrenner lässt sich dadurch mit erhöhter Betriebssicherheit und mit erhöhter Effizienz betreiben. Insgesamt kann dadurch die Funktionssicherheit und die Effizienz des Brennstoffzellensystems gesteigert werden.

Weitere Brennstoffzellensysteme sind aus der DE 100 65 458 A1, aus der US 6,608,463, aus der DE 102 03 028 A1 und aus der US 2004/048120 A1 bekannt.

Die vorliegende Erfindung beschäftigt sich mit dem Problem, für ein Brennstoffzellensystem der eingangs genannten Art eine verbesserte Ausführungsform anzugeben, die sich insbesondere durch eine erhöhte Funktionssicherheit und/oder Effizienz auszeichnet.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, den Bypass aus einer Isolationsbox, welche die Brennstoffzelle und den Restgasbrenner thermisch isoliert, herauszuführen, um das entnommene Kathodenabgas außerhalb der Isolationsbox in das Brennerabgas einspeisen zu können. Die vorgeschlagene Bauweise hat zur Folge, dass ein Bypassventil zum Steuern des Bypassstroms ebenfalls außerhalb der Isolationsbox angeordnet werden kann, wodurch es aufgrund der reduzierten thermischen Anforderungen deutlich preiswerter realisierbar ist. Gleichzeitig kann dadurch bei reduzierten Kosten eine erhöhte Funktionssicherheit realisiert werden.

Gemäß einer vorteilhaften Ausführungsform kann ein Bypassventil zum Steuern einer Kathodenabgasströmung durch den Bypass vorgesehen sein. Mit Hilfe eines derartigen Bypassventils lässt sich das Kathodenabgas gezielt auf den Bypass und auf den Brennraum aufteilen, um so einen optimalen Betrieb für den Restgasbrenner zu realisieren.

Bei einer anderen vorteilhaften Ausführungsform kann eine Kathodengaszuführung zum Steuern einer Kathodengasströmung zur Brennstoffzelle vorgesehen sein. Des Weiteren kann eine Sensorik zum Ermitteln der Temperatur der Brennstoffzelle vorgesehen sein. Ferner kann eine Steuerung vorgesehen sein, mit deren Hilfe die Kathodengaszuführung und das zuvor genannte Bypassventil in Abhängigkeit der Brennstoffzellentemperatur betätigbar sind. Insbesondere ist es dadurch möglich, die Brennstoffzelle zu kühlen, indem die der Brennstoffzelle zugeführten Kathodengasmenge erhöht wird. Durch daran angepasstes, simultanes Erhöhen der durch den Bypass geführten Kathodenabgasströmung lässt sich der Volumenstrom des dem Brennraum zugeführten Kathodenabgases und somit das Gemisch im Brennraum konstant halten. Hierdurch lässt sich ein sicherer Betrieb des Restgasbrenners erreichen.

Bei einer Weiterbildung kann die Sensorik auch so ausgestaltet sein, dass mit ihr die Temperatur des Restgasbrenners bestimmbar ist. Die Steuerung kann dann bevorzugt so ausgestaltet sein, dass sie beim Betätigen des Bypassventils die Restgasbrennertemperatur berücksichtigt. Durch diese Bauweise ist es insbesondere möglich, die Menge des dem Brennraum zugeführten Kathodenabgases gezielt so einzustellen, dass sich auch für den Restgasbrenner ein vorbestimmter Temperaturbereich einstellen lässt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,

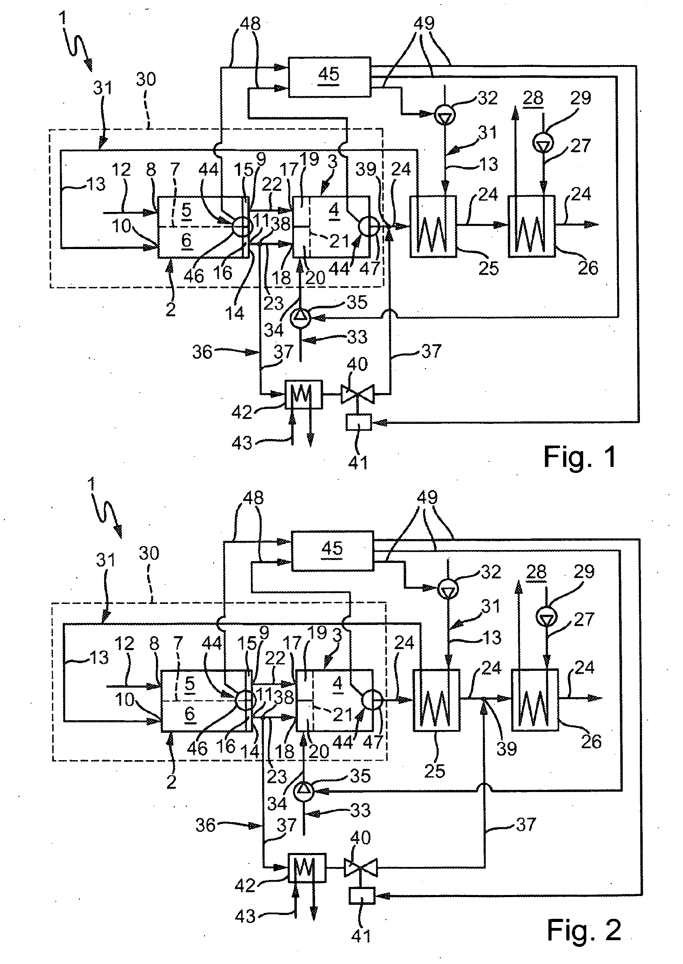

- Fig. 1 bis 4: jeweils eine stark vereinfachte, schaltplanartige Prinzipdarstellung eines Brennstoffzellensystems bei unterschiedlichen Ausführungsformen.

Entsprechend den Fig. 1 bis 4 umfasst ein Brennstoffzellensystem 1 eine Brennstoffzelle 2 sowie einen Restgasbrenner 3. Die Brennstoffzelle 2 dient zum Generieren von elektrischem Strom, den sie durch die Verstromung eines wasserstoffhaltigen Anodengases mit einem sauerstoffhaltigen Kathodengas erzeugt. Der Restgasbrenner 3 dient zum Verbrennen von wasserstoffhaltigem Anodenabgas der Brennstoffzelle 2 mit sauerstoffhaltigem Kathodenabgas der Brennstoffzelle 2. Hierzu weist der Restgasbrenner 3 einen Brennraum 4 auf, in dem die Verbrennungsreaktion stattfindet. Das Brennstoffzellensystem 1 kann gemäß einer bevorzugten Anwendung in einem Kraftfahrzeug angeordnet sein. Beispielsweise dient die Brennstoffzelle 1 als zusätzliche Stromquelle, um elektrische Verbraucher auch bei ausgeschaltetem Verbrennungsmotor des Fahrzeugs betreiben zu können. Ebenso kann die Brennstoffzelle in einem Elektrofahrzeug zur Bereitstellung elektrischer Energie dienen.

Die Brennstoffzelle 2 kann als Hochtemperatur-Brennstoffzelle ausgebildet sein, vorzugsweise als Festkörper-Brennstoffzelle oder SOFC-Brennstoffzelle. Ebenso kann die Brennstoffzelle 2 als Niedertemperatur-Brennstoffzelle ausgestaltet sein, insbesondere als PEM-Brennstoffzelle, die mit einer Protonen-Transport-Membran bzw. mit einer Polymer-Elektrolyt-Membran arbeitet. Bei einer PEM-Brennstoffzelle kann zweckmäßig eine hier nicht gezeigte kombinierte Entnahme- und Einspeiseeinrichtung vorgesehen sein, die Wasserdampf dem Kathodenabgas entnimmt und in das Kathodengas einspeist.

Üblicherweise enthält die Brennstoffzelle 2 eine Anodenseite 5 und eine Kathodenseite 6, die über ein Elektrolyt 7 voneinander getrennt sind. Die Brennstoffzelle 2 ist anodenseitig mit einem Anodengaseingang 8 und mit einem Anodenabgasausgang 9 versehen. Kathodenseitig sind ein Kathodengaseingang 10 und ein Kathodenabgasausgang 11 vorgesehen. An den Anodengaseingang 8 ist eine Anodengasleitung 12 angeschlossen, über die ein Wasserstoff enthaltendes Anodengas der Brennstoffzelle 2 zuführbar ist. Beim Anodengas kann es sich beispielsweise um reinen Wasserstoff oder um ein Synthesegas handeln, das in einem hier nicht gezeigten Reformer des Brennstoffzellensystems 1, z.B. mittels partieller Oxidation eines Kohlenwasserstoff-Brennstoffs, generiert wird. An den Kathodengaseingang 10 ist eine Kathodengasleitung 13 angeschlossen, über die ein Sauerstoff enthaltendes Kathodengas der Brennstoffzelle 2 zuführbar ist. Beim Kathodengas handelt es sich vorzugsweise um Luft; ebenso kann es sich um reinen Sauerstoff handeln.

Üblicherweise ist die Brennstoffzelle 2 durch einen Stapel einzelner Brennstoffzellenelemente gebildet. Ein derartiger Stapel von Brennstoffzellenelementen weist zweckmäßig eine Abschlussplatte 14 auf, die dann den Anodenabgasausgang 9 und den Kathodenabgasausgang 11 enthält. In dieser Abschlussplatte 14 kann anodenseitig ein Anodenabgassammelraum 15 enthalten sein, der mit dem Anodenabgasausgang 9 kommuniziert. Ebenso kann die Abschlussplatte 14 kathodenseitig einen Kathodenabgassammelraum 16 enthalten, der mit dem Kathodenabgasausgang 11 kommuniziert.

Der Restgasbrenner 3 weist einen Anodenabgaseingang 17 und einen Kathodenabgaseingang 18 auf. Über den Anodenabgaseingang 17 wird der Restgasbrenner 3 mit Anodenabgas versorgt, während er über den Kathodenabgaseingang 18 mit Kathodenabgas versorgt wird. Da die Umsetzung bzw. Verstromung des Wasserstoffs mit dem Sauerstoff in der Brennstoffzelle 2 in der Regel unvollständig ist und außerdem vom jeweiligen Betriebszustand der Brennstoffzelle 2 abhängt, enthält das Anodenabgas Wasserstoff, während das Kathodenabgas Sauerstoff enthält. Der Restgasbrenner 3 weist einen Anodenabgasverteilerraum 19, der mit dem Anodenabgaseingang 17 kommuniziert, sowie einen Kathodenabgasverteilerraum 20 auf, der mit dem Kathodenabgaseingang 18 kommuniziert. Der Brennraum 4 ist eingangsseitig durch eine Wandstruktur 21 begrenzt, die eine Vielzahl von, vorzugsweise regelmäßig bzw. symmetrisch angeordneten, Öffnungen versehen ist, von denen die einen mit dem Anodenabgasverteilerraum 19 kommunizieren, von denen die anderen mit dem Kathodenabgasverteilerraum 20 kommunizieren und die alle zum Brennraum 4 hin offen sind. Hierdurch kann über die Wandstruktur 21 eine vergleichsweise homogene Gemischbildung im Brennraum 4 erreicht werden.

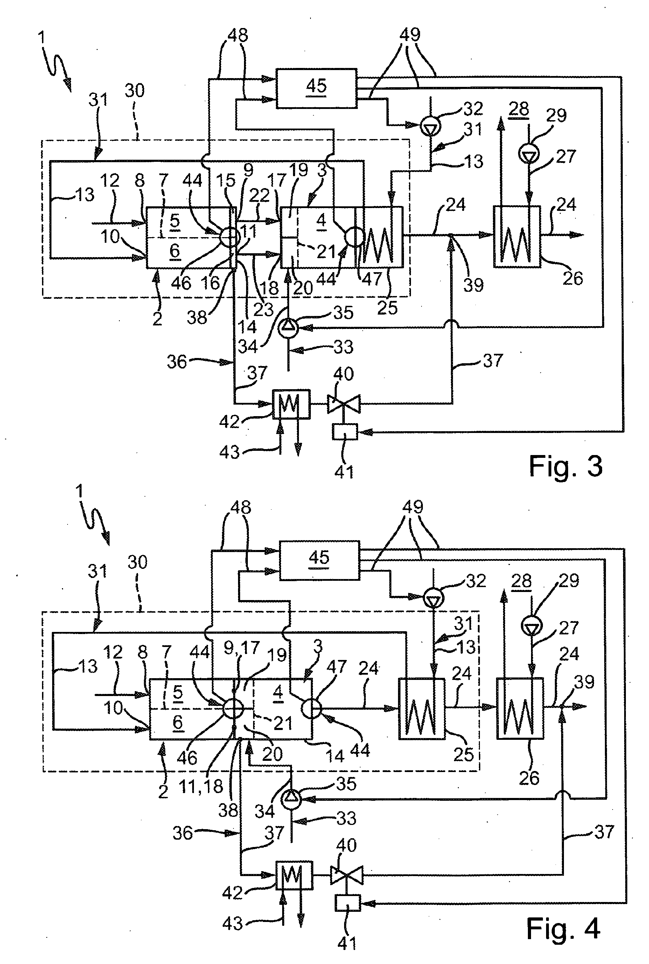

Der Restgasbrenner 3 kann wie in den Ausführungsformen der Fig. 1 bis 3 bezüglich der Brennstoffzelle 2 ein separates Bauteil bilden. In diesem Fall ist der Anodenabgaseingang 17 über eine Anodenabgasleitung 22 mit dem Anodenabgasausgang 9 verbunden. Des weiteren ist der Kathodenabgaseingang 18 über eine Kathodenabgasleitung 23 mit dem Kathodenabgasausgang 11 verbunden. Im Unterschied dazu ist es grundsätzlich auch möglich, den Restgasbrenner 3 mit der Brennstoffzelle 2 gemäß der in Fig. 4 gezeigten Ausführungsform zu einer baulichen Einheit zusammenzufassen. Der Restgasbrenner 3 kann dabei vorzugsweise anstelle der Abschlussplatte 14 an die Brennstoffzelle 2 angebaut sein. Mit anderen Worten, die Abschlussplatte 14 ist durch den Restgasbrenner 3 gebildet. Bei dieser Ausführungsform fallen einerseits der Anodenabgasausgang 9 und der Anodenabgaseingang 17 sowie andererseits der Kathodenabgasausgang 11 und der Kathodenabgaseingang 18 zusammen. Bei der Verbrennungsreaktion im Brennraum 4 des Restgasbrenners 3 entsteht ein Brennerabgas, das den Brenner durch eine Abgasleitung 24 verlässt.

Das Brennstoffzellensystem 1 kann entsprechend den Fig. 1 bis 4 einen dem Restgasbrenner 3 nachgeordneten Wärmeübertrager 25 aufweisen, der im Folgenden als Hauptwärmeübertrager 25 bezeichnet wird. Bei den Ausführungsformen der Fig. 1, 2 und 4 bildet der Hauptwärmeübertrager 25 bezüglich des Restgasbrenners 3 ein separates Bauteil und ist dementsprechend in der Abgasleitung 24 stromab des Restgasbrenners 3 angeordnet. Grundsätzlich ist es jedoch auch möglich, den Hauptwärmeübertrager 25 entsprechend der in Fig. 3 gezeigten Ausführungsform baulich in den Restgasbrenner 3 zu integrieren. Dabei bildet der Hauptwärmeübertrager 25 eine ausgangsseitige Begrenzung des Brennraums 4. Hinsichtlich der Brennerabgasströmung ist der Hauptwärmeübertrager 25 auch hier stromab des Brennraumes 4 angeordnet.

Es ist klar, dass die in Fig. 3 gezeigte Ausführungsform, bei welcher der Hauptwärmeübertrager 25 mit dem Restgasbrenner 3 eine bauliche Einheit bildet, grundsätzlich mit der in Fig. 4 gezeigten Ausführungsform kombinierbar ist, bei welcher der Restgasbrenner 3 mit der Brennstoffzelle 2 eine bauliche Einheit bildet.

Der Hauptwärmeübertrager 25 dient zur Übertragung von im Brennerabgas enthaltener Wärme auf ein Kühlfluid. In den gezeigten Ausführungsformen ist der Hauptwärmeübertrager 25 in die Kathodengasleitung 13 eingebunden, so dass das der Brennstoffzelle 2 zugeführte Kathodengas das Kühlmedium des Hauptwärmeübertragers 25 bildet. Dementsprechend kann das Kathodengas über den Hauptwärmeübertrager 25 vorgewärmt werden.

Des weiteren kann das Brennstoffzellensystem 1 optional einen weiteren Wärmeübertrager 26 aufweisen, der im Folgenden auch als Zusatzwärmeübertrager 26 bezeichnet wird. Der Zusatzwärmeübertrager 26 ist stromab des Hauptwärmeübertragers 25 in die Abgasleitung 24 eingebunden und dient dazu, Wärme vom Brennerabgas auf ein Kühlfluid zu übertragen. Als Kühlfluid kann beispielsweise ein Kühlmittel eines Kühlkreises dienen, der in dem mit dem Brennstoffzellensystem 1 ausgestatteten Fahrzeug zur Kühlung der Brennkraftmaschine angeordnet ist. Alternativ kann der Zusatzwärmeübertrager 26 wie hier in einen Heizkreis 27 eingebunden sein, mit dessen Hilfe zum Beispiel ein Fahrzeuginnenraum 28 beheizbar ist. Der Heizkreis 27 enthält eine geeignete Fördereinrichtung 29, zum Beispiel ein Gebläse, und fördert Luft, die bei der Durchströmung des Zusatzwärmeübertragers 26 erwärmt wird und dem Fahrzeuginnenraum 28 als Warmlust zuführbar ist. Diese Luft bildet somit innerhalb des Zusatzwärmeübertragers 26 das Kühlfluid. Ebenso ist es möglich, mit dem Zusatzwärmeübertrager 26 ein dem weiter oben genannten Reformer zugeführtes Oxidatorgas, z.B. Luft, vorzuwärmen.

Das Brennstoffzellensystem 1 kann mit wenigstens einer Isolationsbox 30 ausgestattet sein, die hier durch eine unterbrochene Linie angedeutet ist. Diese Isolationsbox 30 ist thermisch isolierend ausgestaltet und umschließt die im Betrieb des Brennstoffzellensystems 1 besonders heiß werdenden Komponenten. Zum Beispiel umschließt die Isolationsbox 30 die Brennstoffzelle 2 und den Restgasbrenner 3. Bei den Ausführungsformen der Fig. 2 bis 4 umschließt die Isolationsbox 30 zusätzlich noch den Hauptwärmeübertrager 25. Eine derartige Isolationsbox 30 kommt insbesondere dann zur Anwendung, wenn es sich bei der Brennstoffzelle 2 um eine Hochtemperatur-Brennstoffzelle handelt. Es ist klar, dass grundsätzlich auch separate Isolationsboxen 30 für die Brennstoffzelle 2, den Restgasbrenner 3 und den Hauptwärmeübertrager 25 vorgesehen sein können.

Das Brennstoffzellensystem 1 umfasst ferner eine Kathodengaszuführung 31, die eine Fördereinrichtung 32, zum Beispiel ein Gebläse, sowie die Kathodengasleitung 13 umfasst. Durch entsprechende Betätigung der Zuführeinrichtung 32 kann eine der Brennstoffzelle 2 zugeführte Kathodengasströmung gesteuert werden.

Außerdem kann das Brennstoffzellensystem 1 mit einer Kühlgaszuführung 33 ausgestattet sein, mit deren Hilfe dem Restgasbrenner 3 ein Kühlgas zuführbar ist. Vorzugsweise wird als Kühlgas Luft verwendet. Dementsprechend ist die Kühlgaszuführung 33 kathodenseitig an den Restgasbrenner 3 angeschlossen. Die Kühlgaszuführung 33 weist eine Kühlgasleitung 34 auf, in der eine entsprechende Fördereinrichtung 35, zum Beispiel ein Gebläse, angeordnet ist. Durch Betätigen der Fördereinrichtung 35 kann der dem Restgasbrenner 3 zugeführte Kühlgasstrom gesteuert werden. Im vorliegenden Fall ist die Kühlgasleitung 34 an den Kathodenabgasverteilerraum 20 angeschlossen.

Erfindungsgemäß ist das Brennstoffzellensystem 1 des weiteren mit einem Bypass 36 ausgestattet, der so ausgestaltet ist, dass er Kathodenabgas unter Umgehung des Restgasbrenners 3 beziehungsweise des Brennraums 4 dem Brennerabgas zuführen kann. Hierzu besitzt der Bypass 36 eine Bypassleitung 37, die an einer Entnahmestelle 38 Kathodenabgas entnimmt und dieses an einer Einspeisstelle 39 in das Brennerabgas einspeist. In der Bypassleitung 37 kann ein Bypassventil 40 angeordnet sein, mit dessen Hilfe eine im Bypass 36 strömende Kathodenabgasströmung steuerbar ist. Zum Betätigen des Bypassventils 40 ist ein entsprechendes, damit gekoppeltes Stellglied 41 vorgesehen. Ferner kann optional in der Bypassleitung 37 ein weiterer Wärmeübertrager 42 angeordnet sein, der im Folgenden als Bypasswärmeübertrager 42 bezeichnet wird. Der Bypasswärmeübertrager 42 ist so ausgestaltet, dass darin Wärme vom Kathodenabgas auf ein Kühlmedium übertragbar ist. Dabei ist es grundsätzlich möglich, einen in den Bypasswärmeübertrager 42 eingebundenen Kühlkreis 43 mit dem bereits zuvor genannten Kühlkreis der Brennkraftmaschine zu koppeln oder mit dem Heizkreis 27 zum Beheizen des Fahrzeuginnenraums 28 zu koppeln oder zur Deckung irgendeines beliebigen anderen Wärmebedarfs zu verwenden.

Die gezeigten, bevorzugten Ausführungsformen des Brennstoffzellensystems 1 können außerdem mit einer Sensorik 44 sowie mit einer Steuerung 45 ausgestattet sein. Die Sensorik 44 ist so ausgestaltet, dass damit eine Temperatur der Brennstoffzelle 2, insbesondere die Temperatur des Elektrolyts 7 bzw. die Temperatur der Brennstoffzellenabgase, detektierbar ist. Beispielsweise weist die Sensorik 44 hierzu zumindest einen geeigneten Temperatursensor 46 auf. Optional kann die Sensorik 44 außerdem so ausgestaltet sein, dass sie eine Temperatur des Restgasbrenners 3, zum Beispiel eine Gehäusetemperatur oder eine Flammentemperatur im Brennraum 4 oder die Temperatur des Brennerabgases, ermitteln kann. Hierzu weist die Sensorik 44 beispielsweise wenigstens einen Temperatursensor 47 auf. Für den jeweiligen Sensor 46 beziehungsweise 47 sind hier nur willkürlich herausgegriffene Anordnungsmöglichkeiten wiedergegeben, nämlich an der Austrittsseite der Brennstoffzelle 2 beziehungsweise an der Austrittsseite des Restgasbrenners 3. Es ist klar, dass auch andere Positionierungen für die Sensoren 46, 47 möglich sind.

Die Steuerung 45 ist eingangsseitig über entsprechende Signalleitungen 48 mit der Sensorik 44 beziehungsweise mit deren Sensoren 46, 47 verbunden und ausgangsseitig über entsprechende Steuerleitungen 49 mit dem Bypassventil 40 beziehungsweise mit dessen Stellglied 41, mit der Kathodengaszuführung 31 beziehungsweise mit deren Zuführeinrichtung 32 und mit der Kühlgaszuführung 33 beziehungsweise mit deren Zuführeinrichtung 35.

Bei der in Fig. 1 gezeigten Ausführungsform ist die Entnahmestelle 38 des Bypasses 36 an der Kathodenabgasleitung 23 angeordnet. Die Einspeisstelle 39 ist an der Abgasleitung 24 angeordnet, und zwar stromauf des Hauptwärmeübertragers 25.

Bei er in Fig. 2 gezeigten Ausführungsform ist die Entnahmestelle 38 wieder an der Kathodenabgasleitung 23 angeordnet, während die Einspeisstelle 39 an der Abgasleitung 24 stromab des Hauptwärmeübertragers 25 angeordnet ist. Gleichzeitig ist in diesem Fall die Einspeisstelle 39 stromauf des Zusatzwärmeübertragers 26 angeordnet.

Bei der in Fig. 3 gezeigten Ausführungsform ist die Entnahmestelle 38 an der Brennstoffzelle 2, und zwar an deren Abschlussplatte 14 angeordnet, derart, dass der Bypass 36 das Kathodenabgas dem Kathodenabgassammelraum 16 entnimmt. Die Einspeisstelle 39 ist hier wieder stromab des Hauptwärmeübertragers 25 und stromauf des Zusatzwärmeübertragers 26 an der Abgasleitung 24 angeordnet.

Bei der in Fig. 4 gezeigten Ausführungsform ist die Entnahmestelle 38 am Restgasbrenner 3 angeordnet, und zwar so, dass der Bypass 36 das Kathodenabgas dem Kathodenabgasverteilerraum 20 entnimmt. Die Einspeisstelle 39 ist bei dieser Ausführungsform stromab des Zusatzwärmeübertragers 26 an der Abgasleitung 24 angeordnet.

Für den Bypass 36 ergeben sich somit eingangsseitig und ausgangsseitig jeweils unterschiedliche Möglichkeiten, die beliebig miteinander kombinierbar sind. Die Entnahmestelle 38 kann an der Brennstoffzelle 2, an der Kathodenabgasleitung 23 oder am Restgasbrenner 3 angeordnet sein. Die Einspeisstelle 39 kann stromauf des Hauptwärmeübertragers 25 oder stromab des Hauptwärmeübertragers 25 sowie stromauf des Zusatzwärmeübertragers 26 oder stromab des Zusatzwärmeübertragers 26 angeordnet sein.

Der Bypass 36 beziehungsweise die Bypassleitung 37 ist aus der Isolationsbox 30 herausgeführt. Hierdurch kann der Bypass 36 das entnommene Kathodenabgas außerhalb der Isolationsbox 30 in das Brennerabgas einspeisen. Durch die Verlegung der Bypassleitung 37 außerhalb der Isolationsbox 30 kann auch das Bypassventil 40 außerhalb der Isolationsbox 30 angeordnet werden, wodurch es aufgrund der reduzierten thermischen Anforderungen deutlich preiswerter realisierbar ist. Zweckmäßig ist der Bypasswärmeübertrager 42 in der Bypassleitung 37 stromauf des Bypassventils 40 angeordnet, wodurch das Bypassventil 40 mit gekühltem Kathodenabgas beaufschlagt wird. Auch dies trägt dazu bei, das Bypassventil 40 preiswerter ausgestalten zu können.

Alternativ ist es ebenso möglich, ein hitzebeständiges Bypassventil 40 zu verwenden. Dadurch kann es innerhalb der Isolationsbox 30 angeordnet werden. Ein Bypasswärmeübertrager 42 ist dann nicht erforderlich. Des weiteren kann dann der Bypass 36 bzw. dessen Bypassleitung 37 vollständig innerhalb der Isolationsbox 30 verlaufen. Insbesondere ist dann die Einspeisstelle 39 innerhalb der Isolationsbox 30 angeordnet.

Die Steuerung 45 kann grundsätzlich so ausgestaltet sein, dass sie die Kathodengaszuführung 31 in Abhängigkeit der Brennstoffzellentemperatur betätigt. Zum Kühlen der Brennstoffzelle 2 wird der Kathodengasstrom erhöht; ist die Brennstoffzelle 2 zu weit abgekühlt, wird der Kathodengasstrom entsprechend reduziert. Darüber hinaus kann die Steuerung 45 auch so ausgestaltet sein, dass sie das Bypassventil 40 beziehungsweise dessen Stellglied 41 in Abhängigkeit der Brennstoffzellentemperatur bzw. der Brennerabgastemperatur, und zwar vorzugsweise unter Berücksichtigung der Betätigung der Kathodengaszuführung 31, betätigt. Durch diese Bauweise kann insbesondere ein kontinuierlicher Betrieb des Restgasbrenners 3 gewährleistet werden. Beispielsweise kann mit zunehmendem Kathodengasstrom das Bypassventil 40 zunehmend geöffnet werden, derart, dass der relative Anteil an Kathodenabgas, das in den Brennraum 4 eintritt, so abnimmt, dass die absolute Kathodenabgasmenge, die in den Brennraum 4 eintritt, im wesentlichen konstant bleibt. Der erhöhte Kühlbedarf der Brennstoffzelle 2 hat dadurch keine Auswirkung auf den Betrieb des Restgasbrenners 3.

Ferner kann die Steuerung 45 optional auch so ausgestaltet sein, dass sie beim Betätigen des Bypassventils 40 die Restgasbrennertemperatur bzw. die Brennerabgastemperatur berücksichtigt. Beispielsweise kann auch der Restgasbrenner 3 einen gewissen Kühlbedarf entwickeln, wenn beispielsweise die Brennraumtemperatur zu stark ansteigt. Die Kühlung des Restgasbrenners 3 lässt sich ebenfalls durch eine Erhöhung des Kathodenabgasstroms realisieren. Dementsprechend kann die Steuerung 47 - sofern dies das Betriebsfenster der Brennstoffzelle 2 zulässt - durch Reduzieren des durch den Bypass 36 strömenden Kathodenabgases den dem Brennraum 4 zugeführten Kathodenabgasstrom erhöhen. Falls der Restgasbrenner 3 ohnehin zu kühl arbeitet, kann die Steuerung 47 - sofern dies das Betriebsfenster der Brennstoffzelle 2 zulässt - durch weiteres Öffnen des Bypassventils 40 die dem Restgasbrenner 3 zugeführte Kathodenabgasmenge zusätzlich reduzieren, um so eine Temperatursteigerung zu bewirken.

Für den Fall, dass das Kathodenabgas nicht ausreicht, den Restgasbrenner 3 hinreichend zu kühlen, kann die Steuerung 45 zusätzlich so ausgestaltet sein, dass sie die Kühlgaszuführung 33 in Abhängigkeit der Restgasbrennertemperatur betätigt. Vorzugsweise berücksichtigt die Steuerung 45 bei der Betätigung der Kühlgaszuführung 33 den momentanen Betätigungszustand des Bypassventils 40. Beispielsweise kann vorgesehen sein, dass die Kühlgaszuführung 33 erst dann aktiviert wird, wenn das Bypassventil 40 vollständig geschlossen ist und der Kühlbedarf des Restgasbrenners 3 noch immer nicht gedeckt ist.

## Patentansprüche

1. Brennstoffzellensystem, insbesondere in einem Kraftfahrzeug,
- mit einer Brennstoffzelle (2) zum Generieren von elektrischem Strom aus einem wasserstoffhaltigen Anodengas und einem sauerstoffhaltigen Kathodengas,
- mit einem einen Brennraum (4) aufweisenden Restgasbrenner (3) zum Verbrennen von wasserstoffhaltigem Anodenabgas der Brennstoffzelle (2) mit sauerstoffhaltigem Kathodenabgas der Brennstoffzelle (2),
- mit einem Bypass (36) zur Entnahme von Kathodenabgas stromauf des Brennraums (4) und zur Einspeisung des entnommenen Kathodenabgases stromab des Restgasbrenners (3) in Brennerabgas des Restgasbrenners (3),
**dadurch gekennzeichnet,**
- **dass** zumindest eine thermisch isolierende Isolationsbox (30) vorgesehen ist,
- **dass** zumindest die Brennstoffzelle (2) und der Restgasbrenner (3) in einer solchen oder jeweils in einer solchen Isolationsbox (30) angeordnet sind,
- **dass** der Bypass (36) aus der jeweiligen Isolationsbox (30) herausgeführt ist und das entnommene Kathodenabgas außerhalb der jeweiligen Isolationsbox (30) in das Brennerabgas einspeist.

2. Brennstoffzellensystem nach Anspruch 1,
**dadurch gekennzeichnet,**
**dass** ein Bypassventil (40) zum Steuern einer Kathodenabgasströmung durch den Bypass (36) vorgesehen ist.

3. Brennstoffzellensystem nach Anspruch 1 oder 2,
**dadurch gekennzeichnet,**
- **dass** eine Kathodengaszuführung (31) zum Steuern einer Kathodengasströmung zur Brennstoffzelle (2) vorgesehen ist,
- **dass** eine Sensorik (44) zum Ermitteln der Temperatur der Brennstoffzelle (2) vorgesehen ist,
- **dass** eine Steuerung (45) zum Betätigen der Kathodengaszuführung (31) in Abhängigkeit der Brennstoffzellentemperatur (2) vorgesehen ist.

4. Brennstoffzellensystem nach den Ansprüchen 2 und 3,
**dadurch gekennzeichnet,**
- **dass** die Steuerung (45) zum Betätigen des Bypassventils (40) in Abhängigkeit der Brennstoffzellentemperatur ausgestaltet ist,
- **dass** die Steuerung (45) beim Betätigen des Bypassventils (40) die Betätigung der Kathodengaszuführung (31) berücksichtigt.

5. Brennstoffzellensystem nach Anspruch 3 oder 4,
**dadurch gekennzeichnet,**
- **dass** die Sensorik (44) auch zur Bestimmung der Temperatur des Restgasbrenners (3) und/oder des Brennerabgases ausgestaltet ist,
- **dass** die Steuerung (45) beim Betätigen des Bypassventils (40) die Restgasbrennertemperatur und/oder die Brennerabgastemperatur berücksichtigt.

6. Brennstoffzellensystem nach einem der Ansprüche 3 bis 5,
**dadurch gekennzeichnet,**
- **dass** eine Kühlgaszuführung (33) zum Steuern einer Kühlgasströmung zum Restgasbrenner (3) vorgesehen ist,
- **dass** die Steuerung (45) die Kühlgaszuführung (33) in Abhängigkeit der Restgasbrennertemperatur und/oder der Brennerabgastemperatur betätigt.

7. Brennstoffzellensystem nach den Ansprüchen 5 und 6,
**dadurch gekennzeichnet,**
**dass** die Steuerung (45) beim Betätigen der Kühlgaszuführung (33) die Betätigung des Bypassventils (40) berücksichtigt.

8. Brennstoffzellensystem nach einem der Ansprüche 1 bis 7,
**dadurch gekennzeichnet,**
**dass** im Bypass (36) ein Bypasswärmeübertrager (42) zum Übertragen von Wärme aus dem Kathodenabgas in ein Kühlmedium angeordnet ist.

9. Brennstoffzellensystem nach einem der Ansprüche 1 bis 8,
**dadurch gekennzeichnet,**
- **dass** stromab des Restgasbrenners (3) ein Hauptwärmeübertrager (45) zum Übertragen von Wärme aus dem Brennerabgas in ein Kühlmedium angeordnet ist,
- **dass** der Bypass (36) das entnommene Kathodenabgas stromauf oder stromab des Hauptwärmeübertragers (25) in das Brennerabgas einspeist.

10. Brennstoffzellensystem nach Anspruch 9,
**dadurch gekennzeichnet,**
- **dass** stromab des Hauptwärmeübertragers (25) ein Zusatzwärmeübertrager (26) zum Übertragen von Wärme aus dem Brennerabgas in ein Kühlmedium angeordnet ist,
- **dass** der Bypass (36) das entnommene Kathodenabgas stromauf oder stromab des Zusatzwärmeübertragers (26) in das Brennerabgas einspeist.

11. Brennstoffzellensystem nach einem der Ansprüche 1 bis 10,
**dadurch gekennzeichnet,**
**dass** das Bypassventil (40) und/oder der Bypasswärmeübertrager (42) außerhalb der jeweiligen Isolationsbox (30) angeordnet sind.

## Claims

1. A fuel cell system, more preferably in a motor vehicle,
- with a fuel cell (2) for generating electric current from a hydrogen-containing anode gas and an oxygen-containing cathode gas,
- with a residual gas burner (3) having a combustion chamber (4) for the burning of hydrogen-containing anode waste gas of the fuel cell (2) with oxygen-containing cathode waste gas of the fuel cell (2)
- with a bypass (36) for the removal of cathode waste gas upstream of the combustion chamber (4) and for the feeding of the removed cathode waste gas downstream of the residual gas burner (3) in burner waste gas of the residual gas burner (3)
**characterized**
- **in that** at least one thermally insulating box (30) is provided,
- **in that** at least the fuel cell (2) and the residual gas burner (3) are arranged in such or each in such an insulating box (30),
- **in that** the bypass (36) is led out of the respective insulating box (30) and the removed cathode waste gas is fed into the burner waste gas outside the respective insulating box (30).

2. The fuel cell system according to Claim 1, **characterized in that** a bypass valve (40) for controlling a cathode waste gas flow through the bypass (36) is provided.

3. The fuel cell system according to Claim 1 or 2, **characterized**
- **in that** a cathode gas feed (31) for the controlling of a cathode gas flow to the fuel cell (2) is provided
- **in that** a sensor system (44) for determining the temperature of the fuel cell (2) is provided,
- **in that** a control (45) for actuating the cathode gas feed (31) as a function of the fuel cell temperature (2) is provided.

4. The fuel cell system according to Claims 2 and 3, **characterized**
- **in that** the control (45) for actuating the bypass valve (40) is configured as a function of the fuel cell temperature,
- **in that** the control (45) on actuating the bypass valve (40) takes into account the actuation of the cathode gas feed (31).

5. The fuel cell system according to Claim 3 or 4, **characterized**
- **in that** the sensor system (44) is also configured for determining the temperature of the residual gas burner (3) and/or the burner waste gases,
- **in that** the control (45) on actuating the bypass valve (40) takes into account the residual gas burner temperature and/or the burner waste gas temperature.

6. The fuel cell system according to any one of the Claims 3 to 5, **characterized**
- **in that** a cooling gas feed (33) for controlling a cooling gas flow to the residual gas burner (3) is provided,
- **in that** the control (45) actuates the cooling gas feed (33) as a function of the residual gas burner temperature and/or the burner waste gas temperature.

7. The fuel cell system according to Claims 5 and 6, **characterized in that** the control (45) on actuating the cooling gas feed (33) takes into account the actuation of the bypass valve (40).

8. The fuel cell system according to any one of the Claims 1 to 7, **characterized in that** in the bypass (36) a bypass heat transfer device (42) for the transfer of heat from the cathode waste gas into a cooling medium is arranged.

9. The fuel cell according to any one of the Claims 1 to 8, **characterized**
- **in that** downstream of the residual gas burner (3) a main heat transfer device (45) for the transfer of heat from the burner exhaust gas into a cooling medium is arranged,
- **in that** the bypass (36) feeds the removed cathode waste gas upstream or downstream of the heat transfer device (25) into the burner waste gas.

10. The fuel cell system according to Claim 9, **characterized**
- **in that** downstream of the main heat transfer device (25) an additional heat transfer device (26) for the transfer of heat from the burner waste gas into a cooling medium is arranged,
- **in that** the bypass (36) feeds the removed cathode waste gas upstream or downstream of the additional heat transfer device (26) into the burner waste gas.

11. The fuel cell system according to any one of the Claims 1 to 10, **characterized in that** the bypass valve (40) and/or the bypass heat transfer device (42) are arranged outside the respective insulating box (30).

## Revendications

1. Système de cellules de combustible, en particulier dans un véhicule automobile,
- comprenant une cellule de combustible (2) pour générer du courant électrique à partir d'un gaz d'anode contenant de l'hydrogène et d'un gaz de cathode contenant de l'oxygène,
- un brûleur à gaz résiduel (3) présentant un espace de combustion (4) pour la combustion de gaz brûlé d'anode contenant de l'hydrogène de la cellule de combustible (2) avec du gaz brûlé de cathode contenant de l'oxygène de la cellule de combustible (2),
- une dérivation (36) pour le prélèvement de gaz brûlé de cathode en amont de l'espace de combustion (4) et pour l'injection du gaz brûlé de cathode prélevé en aval du brûleur à gaz résiduel (3) dans du gaz brûlé du brûleur à gaz résiduel (3),
**caractérisé en ce que**
- il est prévu au moins un boîtier d'isolation (30) à isolation thermique,
- **en ce qu'**au moins la cellule de combustible (2) et le brûleur à gaz résiduel (3) sont disposés dans un tel boîtier d'isolation ou chacun dans un tel boîtier d'isolation (30),
- **en ce que** la dérivation (36) est guidée à la sortie du boîtier d'isolation (30) respectif et injecte le gaz brûlé de cathode prélevé à l'extérieur du boîtier d'isolation (30) respectif dans le gaz brûlé de brûleur.

2. Système de cellules de combustible selon la revendication 1,
**caractérisé en ce que**
une soupape de dérivation (40) est prévue pour la commande d'un écoulement de gaz brûlé de cathode par la dérivation (36).

3. Système de cellules de combustible selon la revendication 1 ou 2,
**caractérisé en ce que**
- une arrivée de gaz de cathode (31) est prévue pour la commande d'un écoulement de gaz de cathode vers la cellule de combustible (2),
- **en ce qu'**un capteur (44) est prévu pour la détermination de la température de la cellule de combustible (2),
- **en ce qu'**une commande (45) est prévue pour l'actionnement de l'arrivée de gaz de cathode (31) en fonction de la température de la cellule de combustible (2).

4. Système de cellules de combustible selon la revendication 2 ou 3,
**caractérisé en ce que**
- la commande (45) est conçue pour l'actionnement de la soupape de dérivation (40) en fonction de la température des cellules de combustible,
- **en ce que** la commande (45) pour l'actionnement de la soupape de dérivation (40) tient compte de l'actionnement de l'arrivée de gaz de cathode (31).

5. Système de cellules de combustible selon la revendication 3 ou 4,
**caractérisé en ce que**
- le capteur (44) est conçu également pour la détermination de la température du brûleur de gaz résiduel (3) et/ou du gaz brûlé de brûleur,
- **en ce que** la commande (45) pour l'actionnement de la soupape de dérivation (40) tient compte de la température du brûleur à gaz résiduel et/ou de la température du gaz brûlé de brûleur.

6. Système de cellules de combustible selon l'une quelconque des revendications 3 à 5,
**caractérisé en ce que**
- une arrivée de gaz de refroidissement (33) est prévue pour la commande d'un écoulement de gaz de refroidissement vers le brûleur à gaz résiduel (3),
- **en ce que** la commande (45) actionne l'arrivée de gaz de refroidissement (33) en fonction de la température du brûleur à gaz résiduel et/ou de la température du gaz brûlé de brûleur.

7. Système de cellules de combustible selon les revendications 5 et 6,
**caractérisé en ce que**
la commande (45) pour l'actionnement de l'arrivée de gaz de refroidissement (33) tient compte de l'actionnement de la soupape de dérivation (40).

8. Système de cellules de combustible selon l'une quelconque des revendications 1 à 7,
**caractérisé en ce que**
un échangeur de chaleur à dérivation (42) est disposé dans la dérivation (36) pour le transfert de chaleur du gaz brûlé de cathode dans un agent réfrigérant.

9. Système de cellules de combustible selon l'une quelconque des revendications 1 à 8,
**caractérisé en ce que**
- un échangeur de chaleur principal (45) est disposé en aval du brûleur à gaz résiduel (3) pour le transfert de chaleur du gaz brûlé de brûleur dans un agent réfrigérant,
- **en ce que** la dérivation (36) injecte le gaz brûlé de cathode prélevé en amont ou en aval de l'échangeur de chaleur principal (25) dans le gaz brûlé de brûleur.

10. Système de cellules de combustible selon la revendication 9,
**caractérisé en ce que**
- un échangeur de chaleur supplémentaire (26) est disposé en aval de l'échangeur de chaleur principal (25) pour le transfert de chaleur du gaz brûlé de brûleur dans un agent réfrigérant,
- **en ce que** la dérivation (36) injecte le gaz brûlé de cathode prélevé en amont ou en aval de l'échangeur de chaleur supplémentaire (26) dans le gaz brûlé de brûleur.

11. Système de cellules de combustible selon l'une quelconque des revendications 1 à 10,
**caractérisé en ce que**
la soupape de dérivation (40) et/ou l'échangeur de chaleur à dérivation (42) sont disposés à l'extérieur du boîtier d'isolation (30) respectif.
